# DEMANDE DE BREVET EUROPEEN

(11) **EP 1 728 767 A1**
(43) Date de publication de la demande: **06.12.2006**
(21) Numéro de dépôt: 06356054.4
(22) Date de dépôt: 15.05.2006
(51) Int. Cl.: C02F 1/28, C02F 1/42

(54) **Elément de filtration pour carafe d'eau**

(30) Priorité: 30.05.2005 FR 0505445
(71) Demandeur: Rime, 26120 Montelier (FR)
(72) Inventeur: Lin, Wenqiang, 69003 Lyon (FR); Hebert, Christian, 26100 Romans (FR)
(74) Mandataire: Maureau, Philippe

(57) **Abrégé**

Elément de filtration (13) destiné à un dispositif de traitement d'eau domestique, notamment de type carafe, caractérisé en ce qu'il comporte une poche poreuse souple délimitant au moins un compartiment destiné à loger des réactifs (16, 17) de traitement de l'eau de boisson, sous forme de granulés.

## Description

La présente invention concerne un élément de filtration, ainsi qu'un dispositif de filtration d'eau domestique.

L'eau de distribution contient un grand nombre d'éléments dissous, en particulier constitués par :
- des minéraux naturels comme par exemple le calcium, le magnésium ou le sodium,
- des éléments indésirables tels que par exemple les nitrates, le chlore, les matières organiques, et
- des éléments toxiques, comme par exemple le plomb et l'arsenic.

La présence de ces éléments ainsi que leurs concentrations définissent la qualité chimique de l'eau.

Il est à noter que le chlore est un élément volontairement ajouté par les distributeurs, car il est utile pour garantir la qualité microbiologique de l'eau pendant son transport et son stockage mais qui donne un mauvais goût à l'eau.

Le calcium et le magnésium sont des éléments utiles pour la santé de l'homme mais sont à l'origine de problèmes d'entartrage, notamment par la formation de dépôts de calcaires.

L'eau distribuée, par exemple en Europe, est normalement conforme aux normes de potabilité, les concentrations des éléments indésirables et des éléments toxiques étant en dessous des valeurs réglementaires.

Il est toutefois souhaitable d'améliorer la qualité de l'eau en effectuant un traitement domestique supplémentaire avant de la consommer pour diminuer au maximum les éléments indésirables et toxiques.

Une méthode courante consiste à traiter l'eau avec un dispositif de type carafe de filtration comportant un réservoir supérieur de remplissage, une cartouche contenant des produits ou réactifs chimiques, comme par exemple une résine échangeuse d'ions, et un réservoir inférieur d'eau traitée. L'eau traverse par écoulement gravitaire la cartouche à partir du réservoir supérieur, et l'eau traitée est récupérée dans le réservoir inférieur.

Les cartouches existantes sont réalisées en plastique injecté. Ces cartouches comportent donc une paroi imperméable et rigide, et présentent généralement une forme cylindrique dont la hauteur est supérieure au diamètre.

L'enfermement et la retenue des produits chimiques dans la cartouche sont obtenus par le surmoulage de toiles sur les surfaces inférieures et supérieures à travers desquelles passe l'eau.

La section de passage d'eau est nettement inférieure à la section de la carafe.

Ce type de disposition donne satisfaction pour la filtration de l'eau. Il serait toutefois souhaitable de disposer d'une solution permettant d'obtenir une vitesse de filtration supérieure à celle des cartouches actuelles, permettant de tirer profit efficacement de la section de la carafe.

A cet effet, la présente invention a pour objet un élément de filtration destiné à un dispositif de traitement d'eau domestique, notamment de type carafe, caractérisé en ce qu'il comporte une poche poreuse souple réalisée dans un matériau formant des mailles et délimitant au moins un compartiment destiné à loger des réactifs de traitement de l'eau de boisson, sous forme de granulés.

La souplesse du matériau permet d'épouser au mieux la forme d'un dispositif de filtration afin d'obtenir une étanchéité suffisante entre la poche et le dispositif, pour des formes variées du support.

En outre, l'utilisation de poche en tissu ou en toile formant des mailles périodiques permet, par comparaison avec des matériaux classiques non tissés, d'améliorer l'efficacité du traitement de la poche filtrante.

En effet, l'utilisation de tissu ou de toile permet de réguler très facilement la vitesse voulue de passage d'eau en choisissant un matériau d'une perméabilité adaptée. Cette perméabilité peut notamment être choisie en fonction de la matière du fil, de la dimension des pores, de l'épaisseur, de la technique de tissage ou du traitement utilisé.

La régulation de la vitesse de passage d'eau est, au contraire, difficile à réaliser avec un matériau non tissé, et en particulier pour un écoulement du type gravitaire tel que cela est le cas pour les carafes.

Préférentiellement, le matériau formant des mailles est un tissu, c'est-à-dire en fil tissé, ou une toile.

Selon un mode de réalisation, au moins un compartiment présente des dimensions transversales sensiblement supérieures à sa hauteur, en particulier son diamètre est supérieur à deux fois sa hauteur, de préférence son diamètre est supérieur à trois fois sa hauteur.

Ces dispositions permettent de réaliser une poche d'une hauteur relativement faible, présentant une surface presque aussi importante que celle de la carafe.

Elle permet d'obtenir un bon compromis entre la vitesse d'écoulement de l'eau et l'efficacité du traitement pour le but recherché, à savoir notamment :
- l'amélioration des paramètres organoleptiques, notamment de l'odeur et du goût par le charbon actif,
- la diminution des nitrates et de la dureté avec des résines échangeuses d'ions.

Avantageusement, la poche est réalisée à partir d'un tissu ou d'une toile présentant une maille d'ouverture comprise entre 50 et 250 µm, de préférence entre 120 et 200 µm.

Avantageusement, la poche comporte une collerette périphérique.

Ces dispositions permettent une meilleure étanchéité entre un dispositif de filtration et la poche, notamment si le dispositif comprend un joint s'appuyant sur la collerette, par exemple du type joint à lèvre souple.

Selon un mode de réalisation, la poche comporte au moins un couvercle et au moins un fond.

Avantageusement, le fond est préformé, notamment thermoformé.

Selon un mode de réalisation, la poche poreuse souple comporte au moins deux compartiments superposés, séparés par une paroi poreuse.

Avantageusement, la surface d'une section d'un second compartiment est sensiblement inférieure à la surface d'une section d'un premier compartiment, notamment correspondant sensiblement à la moitié de la surface de section du premier compartiment.

Ces dispositions permettent de traiter la totalité du volume d'eau par les éléments contenus dans le premier compartiment mais seulement une partie du volume par les éléments contenus dans le deuxième compartiment.

Selon un mode de réalisation, la poche poreuse est réalisée en polypropylène alimentaire.

L'invention a également pour objet un dispositif de filtration d'eau domestique, notamment de type carafe, comportant un réservoir de remplissage supérieur et un réservoir de collecte de l'eau traitée inférieur caractérisé en ce qu'il comporte un support comportant au moins une ouverture permettant le passage de liquide, situé entre le réservoir de remplissage supérieur et le réservoir de collecte et destiné à recevoir un élément de filtration tel que décrit ci-dessus.

Avantageusement, le support est de forme complémentaire à la surface inférieure de l'élément de filtration préformé.

Selon un mode de réalisation, le dispositif comporte un corps d'une seule pièce comportant le réservoir de remplissage supérieur, le réservoir de collecte et le support.

Avantageusement, le support comporte une partie périphérique destinée à former un appui pour une collerette de l'élément de filtration.

Selon un mode de réalisation, le support est muni d'un élément d'étanchéité, notamment d'un joint à lèvre souple au niveau de la partie périphérique.

Avantageusement, le diamètre de la poche est largement supérieur à sa hauteur.

Selon un mode de réalisation, la surface de la section de l'élément de filtration, représente une fraction significative de la section du corps du dispositif au niveau du réservoir de remplissage supérieur, notamment au moins la moitié, avantageusement au moins 75 %.

De toute façon, l'invention sera bien comprise à l'aide de la description qui suit, en référence au dessin schématique annexé, représentant à titre d'exemple non limitatif, deux formes de réalisation d'un dispositif selon l'invention.

La figure 1 est une vue schématique en coupe longitudinale, d'un dispositif de filtration selon un premier mode de réalisation.

La figure 2 est une vue schématique, en coupe longitudinale, d'un élément de filtration utilisé dans le dispositif de figure 1.

La figure 3 est une vue de dessus du dispositif de figure 1.

La figure 4 est une vue de dessus du dispositif, selon une variante de forme.

La figure 5 est une vue d'un élément de filtration destiné à un dispositif de filtration selon un second mode de réalisation.

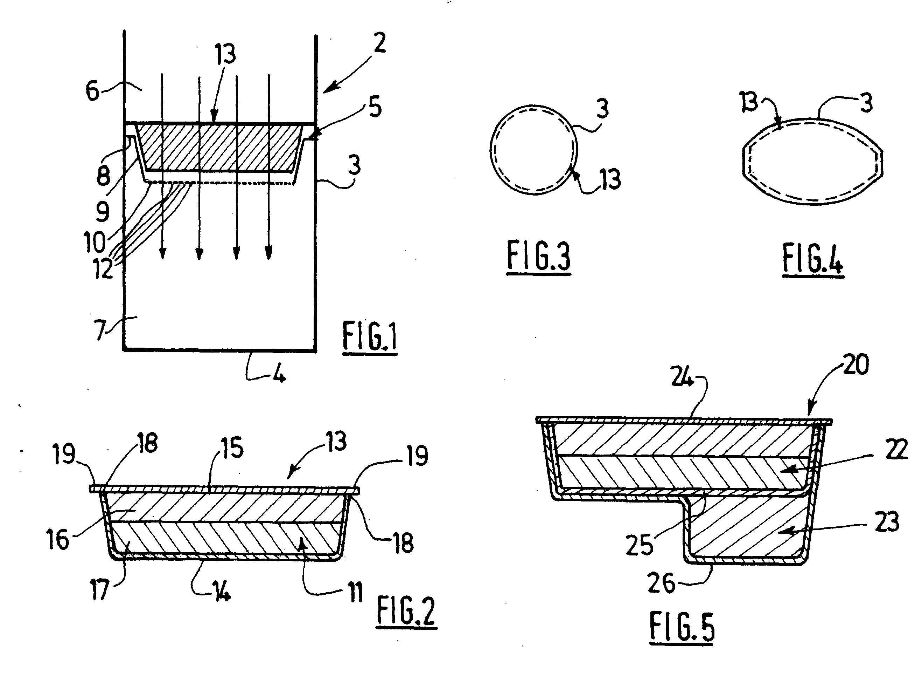

Selon un premier mode de réalisation, représenté sur les figures 1 à 4, un dispositif de filtration 2 selon l'invention, de type carafe de traitement d'eau domestique, comprend un corps 3, d'un seul bloc, comportant une paroi latérale sensiblement tubulaire et verticale, fermée à son extrémité basse par un fond 4.

Le corps comporte également une paroi intermédiaire 5 sensiblement horizontale.

La paroi intermédiaire 5 sépare un réservoir de remplissage supérieur 6 et un réservoir de collecte de l'eau traitée 7.

La paroi intermédiaire 5 comporte une partie périphérique 8 liée à la paroi latérale du corps 3, et une partie centrale 10 située en dessous de la partie périphérique, reliée par un bord 9 à la partie périphérique 8.

La partie centrale 10 comporte des ouvertures 12 permettant le passage de liquide.

La paroi intermédiaire 5 constitue ainsi un support, faisant partie intégrante du dispositif 2 pour un élément de filtration 13.

L'élément de filtration est constitué par une poche poreuse souple 13 posée sur le support 5 formé par la paroi intermédiaire.

Comme représenté sur la figure 2, la poche 13 comprend un fond 14 et un couvercle 15 faits en un même matériau, par exemple en toile de polypropylène alimentaire par exemple. Le fond 14 présente une forme sensiblement complémentaire à celle du support 5, le couvercle 15 est sensiblement plat.

Le fond 14 est thermoformé pour obtenir une forme complémentaire au support 5 du dispositif 2, par exemple de section circulaire, comme le montre la figure 4.

Le fond et le couvercle délimitent un compartiment intérieur (11) dans lequel sont logés un ou plusieurs réactifs chimiques sous la forme de granulés, constitués par exemple, par du charbon actif 16 et de la résine anti-nitrate 17. Les granulés de réactif 16, 17 sont répartis en couches, chaque couche étant uniformément répartie sur toute la surface, afin d'obtenir un traitement homogène pour tous les points de passage d'eau.

La fermeture de la poche 13 est obtenue par une soudure périphérique 18 par ultrason du fond et du couvercle après le remplissage des réactifs 16, 17.

La couvercle présente une collerette périphérique 19, à l'extérieur de la soudure 18, destinée à venir en appui contre la partie périphérique 8 de la paroi intermédiaire 5 formant le support de la poche 13.

Le diamètre de la poche 13 est largement supérieur à sa hauteur. En particulier de l'ordre de 3,5 fois plus important dans l'exemple illustré sur la figure 2. La surface de la poche, correspondant à la section de passage d'eau n'est que légèrement inférieure à celle de la carafe.

Lors de l'utilisation du dispositif, la totalité de l'eau passe ainsi dans la poche 13 contenant les réactifs 16, 17.

La maille d'ouverture de la toile formant la poche 13 est comprise entre 120 et 200 µm de façon à :
- laisser passer l'eau en écoulement gravitaire et
- refermer et retenir les granulés de réactifs chimiques dans la poche.

La souplesse du matériau permet d'épouser au mieux la forme du support afin d'obtenir une étanchéité suffisante entre la poche et le support.

Selon une variante représentée sur la figure 5, la forme est ovale. D'autres formes sont bien entendues réalisables.

Selon une variante non représentée, un joint souple est disposé sur le corps 3 du dispositif, au niveau de la partie périphérique de la paroi intermédiaire formant support 5, le joint étant destiné à venir en appui sur la collerette pour renforcer l'étanchéité entre la poche et le support.

Selon un second mode de réalisation représenté sur la figure 5, le dispositif comprend une poche poreuse souple 20 composite qui comporte :
- un premier compartiment 22, constitué par une poche poreuse souple similaire à celle du premier mode de réalisation, et
- un second compartiment 23, formé par une deuxième poche poreuse souple d'une surface plus petite, par exemple correspondant à la moitié de la surface de la première poche, située en dessous du premier compartiment 22.

Cette poche composite forme une «poche à deux étages».

Un dispositif selon ce second mode de réalisation permet de traiter la totalité de l'eau avec le ou les réactifs du premier étage, c'est-à-dire du premier compartiment 22, mais de ne traiter qu'une partie de l'eau avec le ou les réactifs du deuxième étage, c'est-à-dire du second compartiment 23.

Dans ce mode de réalisation, la poche composite 20 comporte :
- un couvercle 24 sensiblement plat,
- un premier fond 25, délimitant avec le couvercle le premier compartiment 22 et fixé par soudure sur le couvercle 24, comme dans le premier mode de réalisation,
- un second fond 26, délimitant avec le premier fond 25 le second compartiment 23 et fixé par soudure sur le couvercle 24, le second fond 26 entourant le premier fond 25.

La poche composite ainsi formée comporte comme dans le premier mode de réalisation une collerette périphérique 27.

La forme de la partie centrale du support sur le corps du dispositif, non représenté, est bien entendu complémentaire à la surface inférieure de la poche composite 20.

Ce dispositif est particulièrement avantageux pour le traitement anti-calcaire. En effet, il est souvent souhaitable de diminuer la dureté de l'eau sans aller jusqu'à la suppression des ions calcium et de magnésium.

Il suffit pour cela de placer les réactifs destinés à réagir avec les ions calcium et magnésium dans le second compartiment. De cette façon, ces réactifs ne traiteront qu'une partie de l'eau passant dans la poche composite.

Selon un exemple de réalisation, le temps nécessaire pour le traitement un litre d'eau est de l'ordre d'une minute.

Selon une variante non représentée, le deuxième compartiment est situé au dessus du premier.

Comme il va se soi, l'invention ne se limite pas aux formes de réalisation préférentielles décrites ci-dessus, à titre d'exemples non limitatif ; elle en embrasse au contraire toutes les variantes.

## Revendications

1. Elément de filtration (13) destiné à un dispositif de traitement d'eau domestique, notamment de type carafe, **caractérisé en ce qu'**il comporte une poche poreuse souple réalisée dans un matériau formant des mailles et délimitant au moins un compartiment (11, 22, 23) destiné à loger des réactifs (16, 17) de traitement de l'eau de boisson, sous forme de granulés.

2. Elément de filtration (13) selon la revendication 1, **caractérisé en ce que** le matériau formant des mailles est un tissu, c'est-à-dire en fil tissé, ou une toile.

3. Elément de filtration (13) selon l'une des revendications 1 et 2, **caractérisé en ce qu'**au moins un compartiment présente des dimensions transversales sensiblement supérieures à sa hauteur, en particulier son diamètre est supérieur à deux fois sa hauteur, de préférence son diamètre est supérieur à trois fois sa hauteur.

4. Elément de filtration (13) selon l'une des revendications 1 à 3, **caractérisé en ce que** la poche est réalisée à partir d'un tissu ou d'une toile présentant une maille d'ouverture comprise entre 50 et 250 µm, de préférence entre 120 et 200 µm.

5. Elément de filtration (13) selon l'une des revendications 1 à 4, **caractérisé en ce qu'**il comporte une collerette périphérique (19).

6. Elément de filtration (13) selon l'une des revendications 1 à 5, **caractérisé en ce que** la poche comporte au moins un couvercle (15, 24) et au moins un fond (14, 25, 26).

7. Elément de filtration (13) selon la revendication 6, **caractérisé en ce que** le fond (14, 25, 26) est préformé, notamment thermoformé.

8. Elément de filtration (13) selon l'une des revendications 1 à 7, **caractérisé en ce que** la poche poreuse souple comporte au moins deux compartiments superposés (22, 23), séparés par une paroi poreuse (25).

9. Elément de filtration (13) selon la revendication 8, **caractérisé en ce que** la surface d'une section d'un second compartiment (23) est sensiblement inférieure à la surface d'une section d'un premier compartiment (22), notamment correspondant sensiblement à la moitié de la surface de section du premier compartiment (22).

10. Elément de filtration (13) selon l'une des revendications 1 à 9, **caractérisé en ce que** la poche poreuse est réalisée en polypropylène alimentaire.

11. Dispositif de filtration (2) d'eau domestique, notamment de type carafe, comportant un réservoir de remplissage supérieur (6) et un réservoir de collecte de l'eau traitée inférieur (7) **caractérisé en ce qu'**il comporte un support (5) comportant au moins une ouverture (12) permettant le passage de liquide, situé entre le réservoir de remplissage supérieur (6) et le réservoir de collecte (7) et destiné à recevoir un élément de filtration (13) selon l'une des revendications 1 à 10,

12. Dispositif (2) selon la revendication 11, **caractérisé en ce que** le support (5) est de forme complémentaire à la surface inférieure de l'élément de filtration préformé.

13. Dispositif (2) selon l'une des revendications 11 et 12, **caractérisé en ce que** le dispositif comporte un corps (3) d'une seule pièce comportant le réservoir de remplissage supérieur (6), le réservoir de collecte (7) et le support (5).

14. Dispositif (2) selon l'une des revendications 11 à 13, et selon la revendication 4, **caractérisé en ce que** le support (5) comporte une partie périphérique (8) destinée à former un appui pour une collerette (19) de l'élément de filtration.

15. Dispositif (2) selon la revendication 14, **caractérisée en ce que** le support (5) est muni d'un élément d'étanchéité, notamment d'un joint à lèvre souple au niveau de la partie périphérique (8).

16. Dispositif (2) selon l'une des revendications 11 à 15, **caractérisé en ce que** le diamètre de la poche (13) est largement supérieur à sa hauteur.

17. Dispositif (2) selon l'une des revendications 11 à 16, **caractérisé en ce que** la surface de la section de l'élément de filtration, représente une fraction significative de la section du corps du dispositif au niveau du réservoir de remplissage supérieur, notamment au moins la moitié, avantageusement au moins 75 %.
